# EUROPÄISCHE PATENTSCHRIFT

(11) **EP 1 189 969 B1**
(45) Veröffentlichungstag und Bekanntmachung des Hinweises auf die Patenterteilung: **08.09.2004**
(21) Anmeldenummer: 00951286.4
(22) Anmeldetag: 28.06.2000
(51) Int. Cl.: C08G 63/78

(54) **VERFAHREN ZUR KONTINUIERLICHEN HERSTELLUNG VON POLYBUTYLENTEREPHTHALAT AUS TEREPHTHALSÄURE UND BUTANDIOL**
METHOD FOR THE CONTINUOUS PRODUCTION OF POLYBUTYLENETEREPHTHALATE FROM TEREPHTHALIC ACID AND BUTANEDIOL
PROCEDE DE PRODUCTION CONTINUE DE POLYBUTYLENTEREPHTHALAT A PARTIR D'ACIDE TEREPHTHALIQUE ET DE BUTANDIOL

(30) Priorität: 29.06.1999 DE 19929790
(43) Veröffentlichungstag der Anmeldung: 27.03.2002
(73) Patentinhaber: BASF AKTIENGESELLSCHAFT, 67056 Ludwigshafen (DE)
(72) Erfinder: HEITZ, Thomas, 67125 Dannstadt-Schauernheim (DE); KLATT, Martin, 68165 Mannheim (DE); NEUHAUS, Ralf, 69124 Heidelberg (DE)
(74) Vertreter: Isenbruck, Günter, Dr.
(86) Internationale Anmeldenummer: PCT/EP2000/005514
(87) Internationale Veröffentlichungsnummer: WO 2001/000705

(56) Entgegenhaltungen:
- EP-A- 0 046 670
- EP-A- 0 240 279
- DD-A- 269 296
- DE-A- 19 509 551
- GB-A- 2 184 129

## Beschreibung

Die Erfindung betrifft ein Verfahren zur kontinuierlichen Herstellung von Polybutylenterephthalat (PBT) aus Terephthalsäure (TPA) und 1,4-Butandiol (BDO).

Die Herstellung von Polybutylenterephthalat aus Dimethylterephthalat (DMT) und 1,4-Butandiol ist aus dem Stand der Technik bekannt. Nachteilig bei diesem Verfahren ist, daß als Nebenprodukt in geringen Mengen entstehendes Tetrahydrofuran (THF) mit dem während der Umsetzung freiwerdenen Methanol ein Azeotrop bildet und daher nur unter großem Aufwand als Wertstoff zurückgewonnen werden kann.

Die direkte Herstellung von Polybutylenterephthalat aus Terephthalsäure und 1,4-Butandiol wird dadurch erschwert, daß größere Mengen THF gebildet werden, wodurch für die Umsetzung erforderliches 1,4-Butandiol verloren geht. Des weiteren wird, neben THF, 2,5-Dihydrofuran (2,5-DHF) aus 1,4-Butandiol gebildet. Das 2,5-Dihydrofuran ist destillativ nur schwer von THF abzutrennen und mindert daher als Verunreinigung die Qualität des Wertproduktes THF. Ein weiteres Problem bei der direkten Herstellung von Polybutylenterephthalat aus Terephthalsäure und 1,4-Butandiol liegt darin, daß Terephthalsäure in 1,4-Butandiol nicht löslich ist und erst während der Veresterung mit 1,4-Butandiol in Lösung geht. Für die Qualität des hergestellten Polybutylenterephthalats ist es jedoch außerordentlich wichtig, daß dieses frei von Verunreinigungen, wie freien Säuregruppen aus Terephthalsäure, ist. Daher sollte die Terephthalsäure vollständig verestert und gelöst sein, bevor die eigentliche Polykondensation beginnt.

Aus dem Stand der Technik sind bereits Verfahren bekannt, die die direkte Herstellung von Polybutylenterephthalat aus Terephthalsäure und 1,4-Butandiol betreffen.

DD-A 269 296 betrifft ein kontinuierliches Verfahren zur Herstellung von Polyalkylenterephthalaten. Durch die Einstellung der Reaktionsparameter in der Veresterungsstufe der eingesetzten Dicarbonsäure mit dem eingesetzten Glykol soll der Wasserabtrieb aus der Veresterungsphase entscheidend begünstigt werden, so daß Veresterungsprodukte sowohl mit hohem Umsatzgrad als auch mit hohem mittlerem Polymerisationsgrad erhalten werden. Die Veresterungsstufe wird in einer Reaktorkaskade durchgerührt, in der von Reaktor zu Reaktor eine Temperaturerhöhung und Druckerniedrigung erfolgt. Das angegebene Ausführungsbeispiel betrifft die Herstellung von Polyethylenterephthalat aus Terephthalsäure und Ethylenglykol.

In EP-A 0 431 977 ist ein Verfahren zur Erhöhung der direkten Veresterungsgeschwindigkeit einer Disäure und 1,4-Butandiol bis zu einer Veresterung von > 95% der Säuregruppen beschrieben. Das Verfahren kann kontinuierlich in drei Reaktoren erfolgen. Das beschriebene Verfahren umfaßt:
a) Mischen von 1,4-Butandiol und Disäure in einem Verhältnis von mindestens 2:1,
b) Erhitzen der Reaktionsmischung auf 180°C,
c) Zugabe eines geeigneten Katalysators,
d) Reaktion bei Atmosphärendruck und einer mittleren Temperatur von 180 bis 245°C für maximal 60 Minuten.

Mit Hilfe dieses Verfahrens sollen weniger als 5% 1,4-Butandiol zu THF zyklisieren. Der Gehalt an freien Säuregruppen im Endprodukt ist jedoch hoch.

In DE-A 44 15 220 ist ein Verfahren zur Herstellung von Polyestem in einer speziellen Vorrichtung beschrieben. Das Verfahren wird unter fallendem hydrostatischen Druck und steigender Reaktionstemperatur durchgeführt. Zur THF-Bildung werden keine Angaben gemacht.

DE-A 35 44 551 betrifft die kontinuierliche Herstellung von Polybutylenterephthalat aus Terephthalsäure und 1,4-Butandiol. Die Herstellung erfolgt in drei Stufen. Die erste Stufe, die Veresterung, wird bei einer Temperatur von 225 bis 260°C und einem Druck von 0,1 bis 1 bar durchgeführt. Die zweite Stufe, die Vorkondensation, wird bei Temperaturen von 230 bis 260°C und einem Druck von 10 bis 200 mbar durchgeführt und die dritte Stufe, die Polykondensation, bei Temperaturen von 240 bis 265°C und einem Druck von 0,25 bis 25 mbar.

Aufgabe der vorliegenden Erfindung ist es, ein gegenüber dem Stand der Technik verbessertes Verfahren zur Herstellung von Polybutylenterephthalat bereitzustellen. Insbesondere soll die THF- und 2,5-Dihydrofuran-Bildung aus dem eingesetzten 1,4-Butandiol möglichst gering sein, und das erhaltene Polybutylenterephthalat soll einen möglichst geringen Anteil an freien Säuregruppen enthalten.

Die Lösung der Aufgabe geht aus einem Verfahren zur kontinuierlichen Herstellung von Polybutylenterephthalat aus Terephthalsäure und 1,4-Butandiol, umfassend:
a) direkte Veresterung von Terephthalsäure mit 1,4-Butandiol in einer Reaktorkaskade aus mindestens zwei Reaktoren,
b) Vorkondensation des in Stufe a) erhaltenen Veresterungsproduktes,
c) Polykondensation des in Stufe b) erhaltenen Vorkondensats.

Das erfindungsgemäße Verfahren ist dann dadurch gekennzeichnet, daß die Reaktorkaskade in Stufe a) mit fallendem Reaktionsdruck und nicht ansteigender Temperatur betrieben wird.

Das mit Hilfe des erfindungsgemäßen Verfahrens hergestellte Polybutylenterephthalat weist eine hervorragende Qualität auf. Es zeichnet sich durch einen geringen Anteil von Säure- und Alkohol-Gruppen aus. Die Bildung von THF und 2,5-Dihydrofuran aus 1,4-Butandiol ist in dem erfindungsgemäßen Verfahren gering. Dadurch geht nur wenig 1,4-Butandiol verloren, so daß die Ausbeute an Polybutylenterephthalat, bezogen auf 1,4-Butandiol, hoch ist.

### a) Veresterungsstufe

Die Stufe a) wird in einer Reaktorkaskade aus mindestens zwei Reaktoren, bevorzugt aus zwei bis fünf Reaktoren, besonders bevorzugt aus drei Reaktoren durchgeführt. Als Reaktoren werden im allgemeinen Rührkessel eingesetzt.

Erfindungsgemäß wird die Veresterungsstufe in einer Reaktorkaskade durchgeführt, wobei der Reaktionsdruck von Reaktor zu Reaktor fällt. Vorzugsweise wird bei einem Druck von < 1 bar verestert.

Bei einer Reaktorkaskade von drei Reaktoren wird im ersten Reaktor im allgemeinen ein Druck (p1) von < 1 bar, bevorzugt von < 900 mbar, besonders bevorzugt von < 800 mbar eingestellt. Der Druck im zweiten Reaktor (p2) ist < p1, bevorzugt < p1 -100 mbar, besonders bevorzugt < p1 -150 mbar. Im dritten Reaktor wird bei einem Druck (p3) von < p2, bevorzugt von < p2 -100 mbar verestert. So beträgt der Druck vorzugsweise im ersten Reaktor (p1) 650 bis 900 mbar, im zweiten Reaktor (p2) 500 bis 700 mbar und im dritten Reaktor (p3) 350 bis 600 mbar, wobei der Druck in den einzelnen Reaktoren im Rahmen der genannten Bereiche von Reaktor zu Reaktor fällt.

Durch die bevorzugte Verfahrensführung mit einem Druck von weniger als 1 bar wird die THF-Bildung aus 1,4-Butandiol noch besser unterdrückt.

Der Temperaturbereich für die gesamte Veresterungsstufe liegt im allgemeinen bei 170 bis 250°C, bevorzugt bei 180 bis 240°C, besonders bevorzugt bei 190 bis 230°C. Erfindungsgemäß wird die Reaktorkaskade mit nicht ansteigender Temperaturführung betrieben, d.h. die Veresterungstemperatur ist in jedem Reaktor der Reaktorkaskade etwa gleich oder sinkt von Reaktor zu Reaktor.

Die Verweilzeiten für die gesamte Veresterungsstufe liegen im allgemeinen bei 140 bis 430 Minuten, bevorzugt bei 160 bis 420 Minuten, besonders bevorzugt bei 170 bis 390 Minuten. Bei einer Reaktorkaskade von drei Reaktoren beträgt die Verweilzeit im ersten Reaktor (V1) im allgemeinen 100 bis 250 Minuten, bevorzugt 110 bis 250 Minuten, besonders bevorzugt 120 bis 240 Minuten, im zweiten Reaktor (V2) im allgemeinen 20 bis 105 Minuten, bevorzugt 30 bis 100 Minuten, besonders bevorzugt 30 bis 90 Minuten und im dritten Reaktor (V3) im allgemeinen 20 bis 75 Minuten, bevorzugt 20 bis 70 Minuten, besonders bevorzugt 20 bis 60 Minuten.

Für die Veresterung wird im allgemeinen ein molarer Überschuß von 1,4-Butandiol eingesetzt, um das Estergleichgewicht in der gewünschten Richtung zu beeinflussen. Die molaren Verhältnisse von 1,4-Butandiol zu Terephthalsäure betragen im allgemeinen von 1,1 zu 1 bis 3,5 zu 1, bevorzugt von 1,5 zu 1 bis 2,8 zu 1, besonders bevorzugt von 1,9 zu 1 bis 2,5 zu 1.

In einer bevorzugten Ausführungsform wird eine Suspension enthaltend 1,4-Butandiol und Terephthalsäure in einem molaren Verhältnis von im allgemeinen < 2 zu 1, bevorzugt von < 1,5 zu 1 in ein Vorlagegefäß überführt und mit heißem 1,4-Butandiol auf 50 bis 100°C, bevorzugt auf 60 bis 100°C, besonders bevorzugt auf 70 bis 90°C erwärmt und verdünnt, so daß das Verhältnis von 1,4-Butandiol zu Terephthalsäure dem genannten Endverhältnis entspricht.

Zu diesem BDO/TPA-Gemisch wird ein Veresterungskatalysator gegeben, im allgemeinen eine lewissaure Metallverbindung, wobei das bevorzugte Metall Titan oder Zinn ist. Besonders bevorzugte Veresterungskatalysatoren sind Tetrabutylorthotitanat (TBOT), Triisopropyltitanat und Zinn-di-octoat, wobei Tetrabutylorthotitanat ganz besonders bevorzugt ist. Der Katalysator wird in der Veresterungsstufe im allgemeinen in Mengen von < 200 ppm, bevorzugt von 65 bis 150, besonders bevorzugt von 75 bis 100, berechnet auf das Metall des eingesetzten Veresterungskatalysators, bezogen auf Polybutylenterephthalat, eingesetzt. Dabei kann der gesamte Katalysator dem ersten Reaktor zugesetzt werden. In einer bevorzugten Ausführungsform wird jedoch nur ein Teil der Katalysatormenge, bevorzugt < 50 ppm, besonders bevorzugt < 25 ppm, berechnet auf das Metall, bezogen auf Polybutylenterephthalat, in den ersten Reaktor und der restliche Teil der Katalysatormenge in die folgenden Reaktoren, bevorzugt in den zweiten Reaktor, gegeben. Vorzugsweise wird der Veresterungskatalysator, gemischt mit 1,4-Butandiol, dem Reaktor zugeführt.

Die Reaktionsmischung enthaltend Terephthalsäure, 1,4-Butandiol und einen Veresterungskatalysator wird in einer Reaktorkaskade bis zu einem Umsatz von im allgemeinen > 97%, bevorzugt von 97 bis 99%, bezogen auf Terephthalsäure, umgesetzt. Wird die Veresterungsstufe in einer Reaktorkaskade mit drei Reaktoren durchgeführt, so wird im ersten Reaktor im allgemeinen bis zu einem Umsatz (U1) von > 89% verestert. Das entstehende THF/Wasser-Gemisch wird abgetrennt und das Reaktionsgemisch wird in den zweiten Reaktor überführt, in dem bis zu einem Umsatz (U2) von im allgemeinen > 95% verestert wird. Im allgemeinen ist zu diesem Zeitpunkt bereits die gesamte Terephthalsäure umgesetzt oder in Lösung, was an einem klaren Reaktionsgemisch erkennbar ist (Klärpunkt). Das Reaktionsgemisch wird zur Sicherheit bevorzugt in einen dritten Reaktor überführt und bis zu einem Umsatz (U3) von im allgemeinen > 97% verestert.

Das erhaltene Reaktionsgemisch wird anschließend kontinuierlich in das Veresterungsprodukt und ein THF/BDO/Wasser-Gemisch aufgetrennt. Das THF/BDO/Wasser-Gemisch wird in einem Kolonnensystem getrennt und zurückgewonnenes 1,4-Butandiol wird in den ersten Veresterungsreaktor zurückgeführt. Das Veresterungsprodukt wird kontinuierlich in die Vorkondensationsstufe b) überführt.

### b) Vorkondensationsstufe

Die Vorkondensationsstufe weist im allgemeinen mindestens zwei, bevorzugt mindestens drei, besonders bevorzugt mindestens vier Temperaturzonen auf. Die Temperatur einer folgenden Zone liegt hierbei im allgemeinen 1 bis 25°C, bevorzugt 1 bis 15°C, besonders bevorzugt 1 bis 10°C höher als die Temperatur einer vorhergehenden Zone. Der Temperaturbereich für die gesamte Vorkondensation liegt im allgemeinen bei 220 bis 300°C, bevorzugt bei 225 bis 290°C, besonders bevorzugt bei 230 bis 260°C.

Im allgemeinen erfolgt die Vorkondensation in einem Druckbereich zwischen 0,05 bar und dem Veresterungsdruck in dem letzten Reaktor der Reaktorkaskade der Veresterungsstufe. Bevorzugt erfolgt sie in der Weise, daß in der ersten Zone der Druck dem Reaktionsdruck in dem letzten Veresterungsreaktor entspricht, und in den folgenden Zonen im allgemeinen 20 bis 500 mbar, bevorzugt 25 bis 450 mbar, besonders bevorzugt 30 bis 400 mbar beträgt, wobei der Druck vorzugsweise von einer Zone zur darauffolgenden Zone sinkt.

Vorzugsweise wird die Vorkondensation in einem Steigrohrreaktor durchgeführt.

Die Verweilzeiten betragen für die gesamte Stufe b) des Verfahrens im allgemeinen 10 bis 80 Minuten, bevorzugt 15 bis 70 Minuten, besonders bevorzugt 30 bis 60 Minuten. In einer besonders bevorzugten Ausführungsform wird die Vorkondensation in vier Temperaturzonen durchgeführt, wobei die Temperatur von Zone zu Zone in den oben beschriebenen Verhältnissen leicht ansteigt und der Druck von der ersten bis zur vierten Zone innerhalb der beschriebenen Grenzen reduziert wird. Die vierte Zone besteht bei dieser bevorzugten Ausführungsform aus einer Vorrichtung zur Trennung von Dampfund Flüssigphase. Dort werden überschüssiges 1,4-Butandiol, THF und Wasser vom Vorkondensat abgetrennt.

Die in der Veresterungsstufe des erfindungsgemäßen Verfahrens genannten Katalysatoren können in den genannten Mengen ebenfalls in die Vorkondensationsstufe zudosiert werden.

Nach der Vorkondensation weist das Vorkondensat eine Viskositätszahl von im allgemeinen 5 bis 50, bevorzugt 15 bis 40 ml/g auf, gemessen als 0,5 gew.-%ige Lösung in Phenol/o-Dichlorbenzol (1:1) gemäß ISO 1628, Teil 3 (1985) bei 25°C.

Das Vorkondensat wird anschließend in den Polykondensationsreaktor (Stufe c)) überführt.

### c) Polykondensationsstufe

Die Stufe c) wird im allgemeinen einzonig durchgerührt, bei Temperaturen von im allgemeinen 240 bis 290°C, bevorzugt von 240 bis 270°C, besonders bevorzugt von 240 bis 265°C. Der Druck beträgt im allgemeinen 0,2 bis 20 mbar, bevorzugt 0,3 bis 10 mbar.

Die Verweilzeiten betragen üblicherweise 30 bis 180 Minuten, bevorzugt 35 bis 150 Minuten.

Während der Polykondensation wird vorzugsweise eine Oberflächenerneuerung des Produktes vorgenommen. Oberflächen erneuerung bedeutet, daß ständig neues Polymer an die Oberfläche der Schmelze gelangt, so daß der Austritt des Diols erleichtert wird. Diese beträgt vorzugsweise 1 bis 20 m²/kg Produkt und Minute, besonders bevorzugt 1,5 bis 6 m²/kg Produkt und Minute.

Im allgemeinen wird in der Polykondensationsstufe kein weiterer Katalysator zugegeben, es kann jedoch auch in dieser Stufe des Verfahrens ein Katalysator, beispielsweise wie er vorstehend beschrieben wurde, zugegeben werden.

Nach der kontinuierlichen Polykondensation weist der Polyester eine Viskositätszahl von im allgemeinen 60 bis 180 ml/g, bevorzugt von 90 bis 160 ml/g auf, bestimmt in einer 0,5 gew.-%igen Lösung in einem Phenol/o-Dichlorbenzolgemisch (Gewichtsverhältnis 1:1 bei 25°C) gemäß ISO 1628, 3.Teil (1985).

Bevorzugt werden in der Polykondensationsstufe des erfindungsgemäßen Verfahrens bei Erreichen von mindestens 80%, bevorzugt von mindestens 95%, besonders bevorzugt von 100% der gewünschten Endviskositätszahl des Polyesters Schmier- und Nukleierungsmittel der Polymerschmelze gemeinsam zugegeben, die Schmelze wird gegebenenfalls nachkondensiert und anschließend ausgetragen, abgekühlt und granuliert. Bevorzugt erfolgt die Zugabe des Schmiermittels in einer Menge von im allgemeinen 0,01 bis 3 Gew.-%, bevorzugt von 0,1 bis 1 Gew.-%, besonders bevorzugt von 0,2 bis 0,8 Gew.-% und des Nukleierungsmittels in einer Menge von im allgemeinen 0,001 bis 2 Gew.-%, bevorzugt von 0,01 bis 1 Gew.-%, besonders bevorzugt von 0,03 bis 0,5 Gew.-%, jeweils bezogen auf 100 Gew.-% des Polybutylenterephthalats.

Besonders bevorzugt erfolgt die Zugabe in Form einer Suspension, wobei man das Nukleierungsmittel vor der Zugabe zur Schmelze gegebenenfalls bei erhöhter Temperatur im Schmiermittel suspendiert. Je nach Art des eingesetzten Schmiermittels kann es zur Herstellung einer Suspension erforderlich sein, die Mischung aus Schmiermittel und Nukleierungsmittel vorab auf Temperaturen von im allgemeinen 30 bis 150°C, bevorzugt von 60 bis 130°C zu erhitzen und anschließend zur Polymerschmelze zuzugeben.

Beispiele für geeignete Schmiermittel sind niedermolekulare Polyethylenwachse, welche bei Raumtemperatur in fester Form vorliegen und zur Herstellung einer Suspension mit dem Nukleierungsmittel erhitzt werden müssen. Solche Schmiermittel sind niedermolekulare Polyethylenwachse, welche vorzugsweise funktionelle Gruppen, wie Glycidyl- und/oder Carboxylgruppen enthalten können, mit einem mittleren Molekulargewicht Mₙ (Zahlenmittel) von im allgemeinen 500 bis 20000, bevorzugt von 1000 bis 10000, besonders bevorzugt von 1000 bis 5000 und ganz besonders bevorzugt von 1000 bis 3000 g/mol.

Das Molekulargewicht wird üblicherweise durch Gelpermeationschromatographie (GPC) mit LDPE-Standard (low density polyethylene) bestimmt. Die Schmelzviskosität beträgt bevorzugt 100 bis 5000, besonders bevorzugt 100 bis 3000 und ganz besonders bevorzugt 100 bis 2000 mm²/g (gemäß DIN 51 562) bei einer Temperatur von 120°C.

Als Nukleierungsmittel eignen sich insbesondere Mineralien aus der Gruppe der Alkali- und/oder Erdalkali(alumo)silikate, bevorzugt aus der Gruppe der Inselsilikate oder Schichtsilikate. Es können alle möglichen Verbindungen wie Hydroxide, Carbonate, Hydroxycarbonate, Sulfate, Silikate sowie Phosphate und Phosphonate verwendet werden. Als weitere geeignete Nukleierungsmittel seien Alkali- oder Erdalkalisalze von organischen oder anorganischen Säuren genannt wie Natriumantimonat, Calciumstearat, Natriumterephthalat, Calciumcitrat sowie Metallsäuren (basische Säuren) des Titans oder Wolframs.

Geeignete Derivate von anorganischen Säuren sind vorzugsweise Phosphorsäurederivate, wobei Natriumphenlyphosphinat, Zinkphosphat, Calcium (bis -3,5-di-tert.-butylethyl)phosphonat (Irganox® 1425 der Ciba Geigy AG) sowie Tetrakis(2,4-di-tert.-butylphenyl)-4,4-biphenylendiphosphonit besonders bevorzugt wird.

Geeignete Polykondensationsvorrichtungen sind dem Fachmann bekannt. In einer besonders bevorzugten Ausführungsform kann man die Schmelze aus dem Polykondensationsreaktor austragen, über geeignete Vorrichtungen, z.B. eine Dosierpumpe mit Heizung, die Mischung aus Schmier- und Nukleierungsmittel zugeben und die Polymerschmelze anschließend in z.B. ein "Sulzerrohr" überführen und auf die gewünschte Endviskositätszahl kondensieren, wobei eine Homogenisierung der Schmelze erfolgt, anschließend austragen, kühlen und granulieren.

Das erhaltene Polybutylenterephthalat weist im allgemeinen eine Säurezahl von < 50 mval/kg, bevorzugt von < 35 mval/kg, besonders bevorzugt < 30 mval/kg auf. Die Säurezahl wird durch Titration mit Natriumhydroxid bestimmt.

Das erfindunggemäße Verfahren hat den Vorteil, daß nur geringe Mengen THF aus 1,4-Butandiol gebildet werden, und somit nur wenig 1,4-Butandiol verloren geht. Im allgemeinen ist der Anteil an gebildetem THF, bezogen auf die erhaltene Menge Polybutylenterephthalat, < 5 Gew.-%, bevorzugt < 4 Gew.-%, besonders bevorzugt < 3,5 Gew.-%. Ebenso wird nur wenig 2,5-Dihydrofuran aus 1,4-Butandiol gebildet. Vorzugsweise ist der Anteil an gebildetem 2,5-Dihydrofuran, bezogen auf die erhaltene Menge Polybutylenterephthalat, < 150 ppm, besonders bevorzugt < 100 ppm.

Die nachfolgenden Beispiele erläutern die Erfindung zusätzlich.

### BEISPIELE

### Versuchsvorschrift: Veresterungsstufe bei konstanter Temperatur und fallendem Druck

Terephthalsäure wird mit 1,4-Butandiol in einem molaren Verhältnis von Terephthalsäure zu 1,4-Butandiol = 1:1,2 mol vorgemischt und in einen Reaktionskessel R1 vorgelegt und mit 1,4-Butandiol aufgefüllt. In das 1,4-Butandiol wird TBOT (1), d.h. ein Teil des Veresterungskatalysators, eingemischt. Das Gemisch durchläuft insgesamt 8 Reaktionszonen (3 Reaktionskessel R1 bis R3 (Veresterungsstufe a)), 4 Reaktionszonen in einem senkrecht stehenden Rohr R4 bis R7 (Vorkondensationsstufe b)) sowie den Polykondensationsreaktor R8 (Polykondensationsstufe c))) bis zum endgültigen Polybutylenterephthalat mit den Temperaturen T1 bis T8, und den Drücken p1 bis p8 und den Verweildauern V1 bis V8, wobei die Drücke p1 bis p3 in den Reaktionszonen R1 bis R3 abnahmen. In R2 wurde eine zusätzliche Menge TBOT (2) dosiert. Die Destillate aus R1 bis R3, welche im wesentlichen 1,4-Butandiol, THF und Wasser enthielten, wurden kontinuierlich in einem Kolonnensystem getrennt und 1,4-Butandiol in R1 zurückgeführt und der Rest (im wesentlichen Wasser und THF) in einem Sammelgefäß kondensiert und analysiert. Das Sammelgefäß für die Destillate wurde mit einem Kryostaten auf -20°C gekühlt, damit das leicht flüchtige THF nicht verdampft. Zusätzlich wurde am Überlauf zwischen R1 und R2, R2 und R3 sowie R3 und R4 eine Probe entnommen und durch Bestimmung der Säurezahl der Umsatz U 1 bis U3 bestimmt. Das Erreichen des Klärpunktes wurde visuell bestimmt. THF wurde quantitativ mittels Gaschromatographie bestimmt und ins Verhältnis zur erhaltenen Menge Polybutylenterephthalat gesetzt, d.h., bei einer THF-Bildung von 5% entstehen pro Kilogramm Polybutylenterephthalat 50g THF. Die Endgruppen der erhaltenen Polybutylenterephthalat-Produkte wurden mittels Titration bestimmt. Die Viskositätsmessung (VZ-Messung) erfolgte gemäß ISO 1628 in Phenol/o-Dichlorbenzol.

Das Veresterungsprodukt wurde einem senkrecht stehenden Rohr zugeführt, das in vier Heizzonen unterteilt war.

Die Temperatur in der vierten Reaktionszone betrug 247°C bei einem Druck, der dem Druck im dritten Reaktor der Veresterungsstufe entsprach und einer mittleren Verweilzeit von 22 min.

Die Temperatur in der fünften Reaktionszone betrug 252°C bei einem Druck von 400 mbar und einer mittleren Verweilzeit von 11 min.

Die Temperatur in der sechsten Reaktionszone betrug 256°C bei einem Druck von 30 mbar und einer mittleren Verweilzeit von 18 min.

Das überschüssige 1,4-Butandiol und die Reaktionsprodukte wie THF und Wasser wurden am oberen Ende des Reaktionsrohres abgetrennt. Das Vorkondensat wurde ohne weitere Zugabe von Katalysatoren in einen Polykondensationsreaktor (Zone 8) überführt.

Die Temperatur in der achten Reaktionszone betrug 257°C bei einem Druck von 0,4 mbar, einer mittleren Verweilzeit von 115 min und einer Oberflächenerneuerung von 4 m²/h*kg Polybutylenterephthalat.

Tabelle 1 zeigt die gemäß der Versuchsvorschrift erhaltenen Ergebnisse sowie die Ergebnisse der Vergleichsversuche V1 bis V4.

Nicht variierte Versuchsparameter:

| | |
|---|---|
| T4, T5, T6, T7, T8 = | 247°C, 252°C, 255°C, 256°C und 257°C |
| p4 = | p3 |
| p5, p6, p7, p8 = | 400 mbar, 150 mbar, 30 mbar und 0,4 mbar |
| V4, V5, V6, V7, V8 = | 22 Minuten, 11 Minuten, 5 Minuten, 18 Minuten und 115 Minuten |
| Durchsatz: BDO:TPA = | 450 g/h: 690 g/h |
| Ausbeute an PBT: | 910 g/h |

**Tabelle 1:**

| | 1 | 2 | 3 | 4 | 5 | 6 | V1 (**) | V2 | V4 (***) |
|---|---|---|---|---|---|---|---|---|---|
| | | | | | | | | | |
| TBOT (1) | 15 | 15 | 15 | 15 | 20 | 20 | 15 | 15 | 75 |
| TBOT (2) | 100 | 100 | 100 | 100 | 100 | 100 | 100 | 100 | - |
| BDO (g/h) | 370 | 370 | 370 | 370 | 370 | 370 | 370 | 370 | 420 |
| p1 | 800 | 850 | 900 | 900 | 600 | 600 | 800 | 800 | 650 |
| p2 | 600 | 650 | 700 | 700 | 500 | 500 | 700 | 800 | |
| p3 | 400 | 500 | 600 | 600 | 400 | 400 | 600 | 800 | |
| T1 | 215 | 220 | 225 | 230 | 210 | 210 | 215 | 215 | 217 |
| T2 | 215 | 220 | 225 | 230 | 210 | 210 | 225 | 215 | - |
| T3 | 215 | 220 | 225 | 230 | 210 | 210 | 230 | 215 | - |
| V1 | 182 | 182 | 182 | 182 | 182 | 212 | 182 | 182 | 182 |
| V2 | 63 | 63 | 63 | 63 | 63 | 78 | 63 | 63 | - |
| V3 | 40 | 40 | 40 | 40 | 40 | 65 | 40 | 40 | - |
| U1 | 90,3 | 90,8 | 91,1 | 93,5 | 87,2 | 89,2 | 90,4 | 90,2 | 90,5 |
| U2 | 92,1 | 93,5 | 93,9 | 96,1 | 91,4 | 92,7 | 94,1 | 91,7 | - |
| U3 | 97,8 | 98,1 | 98,2 | 98,4 | 94,2 | 95,3 | 98,5 | 96,3 | - |
| Klärpunkt | Ja | Ja | Ja | Ja | Ja(*) | Ja | Ja | Ja | Nein |
| THF (%) | 2,14 | 2,11 | 2,37 | 2,53 | 2,01 | 2,21 | 3,89 | 3,15 | 7,32 |
| 2,5 DHF (%) | 0,012 | 0,010 | 0,013 | 0,018 | 0,009 | 0,015 | 0,036 | 0,028 | 0,042 |
| OH | 24 | 25 | 23 | 24 | 24 | 23 | 23 | 24 | 52 |
| COOH | 25 | 25 | 25 | 24 | 41 | 24 | 24 | 25 | 143 |
| VZ | 125 | 122 | 126 | 131 | 130 | 128 | 125 | 127 | 95 |

| | | | | | | | | | |
|---|---|---|---|---|---|---|---|---|---|
| (*)= Bei den Versuchen unter den Bedingungen war die Reaktionslösung noch ganz schwach trübe. | | | | | | | | | |
| (**)= Analog zu DD-A 269 296, fallender Druck, steigende Temperatur. | | | | | | | | | |
| (***)=Analog zu DE-A 35 445 51, Ex. 9, abweichend zu den vorhergehenden Versuchen wurde die Veresterung bei einem Druck von 0,65 bar durchgeführt. Da der Siedepunkt von 1,4-Butandiol bei 0,65 bar bei ca. 210°C liegt, konnte die in Ex. 9 beschriebene Reaktionstemperatur (245°C) nicht erreicht werden. Bei Erhöhung der Temperatur des Wärmebades destillierte 1,4-Butandiol ab, wodurch sich die Temperatur des Reaktionsgemisches auf 217°C einstellte. | | | | | | | | | |

## Patentansprüche

1. Verfahren zur kontinuierlichen Herstellung von Polybutylenterephthalat aus Terephthalsäure und 1,4-Butandiol, umfassend:
a) direkte Veresterung. von Terephthalsäure mit 1,4-Butandiol in einer Reaktorkaskade aus mindestens zwei Reaktoren,
b) Vorkondensation des in Stufe a) erhaltenen Veresterungsproduktes,
c) Polykondensation des in Stufe b) erhaltenen Vorkondensats,
**dadurch gekennzeichnet, daß** die Reaktorkaskade in Stufe a) mit fallendem Reaktionsdruck und nicht ansteigender Temperatur betrieben wird.

2. Verfahren nach Anspruch 1, **dadurch gekennzeichnet, daß** die Veresterung in Stufe a) bei Drücken von < 1 bar durchgeführt wird.

3. Verfahren nach Anspruch 1 oder 2, **dadurch gekennzeichnet, daß** in einer Reaktorkaskade von drei Reaktoren der Druck im ersten Reaktor (p1) < 1 bar, der Druck im zweiten Reaktor (p2) < p1 -100 mbar und der Druck im dritten Reaktor (p3) < p2 ist.

4. Verfahren nach einem der Ansprüche 1 bis 3, **dadurch gekennzeichnet, daß** die Stufe a) bei einer Temperatur von 170 bis 250°C durchgeführt wird.

5. Verfahren nach einem der Ansprüche 1 bis 4, **dadurch gekennzeichnet, daß** das molare Verhältnis von 1,4-Butandiol zu Terephthalsäure zu Beginn der Stufe a) 1,1:1 1 bis 3,5:1 beträgt.

6. Verfahren nach einem der Ansprüche 1 bis 5, **dadurch gekennzeichnet, daß** der Umsatz nach dem letzten Reaktor der Stufe a) > 97% beträgt, bezogen auf Terephthalsäure, bevor die Vorkondensation in Stufe b) beginnt.

7. Verfahren nach einem der Ansprüche 1 bis 6, **dadurch gekennzeichnet, daß** die Stufe a) in Gegenwart eines Katalysators, bevorzugt Tetrabutylorthotitanat, durchgeführt wird.

8. Verfahren nach einem der Ansprüche 1 bis 7, **dadurch gekennzeichnet, daß** die Stufe b) bei Temperaturen zwischen 220 und 300°C und Drücken zwischen 0,05 bar und dem Veresterungsdruck in dem letzten Reaktor der Reaktorkaskade der Stufe a) erfolgt.

9. Verfahren nach einem der Ansprüche 1 bis 8, **dadurch gekennzeichnet, daß** das in der Stufe b) erhaltene Vorkondensat in der Stufe c) bei Temperaturen von 240 bis 290°C und Drücken von 0,2 bis 20 mbar polykondensiert wird.

10. Verfahren nach Anspruch 9, **dadurch gekennzeichnet, daß** solange polykondensiert wird, bis das erhaltene Polykondensat eine Säurezahl von < 50 mval/kg aufweist.

## Claims

1. A process for the continuous preparation of polybutylene terephthalate from terephthalic acid and 1,4-butanediol, comprising:
a) direct esterification of terephthalic acid with 1,4-butanediol in a reactor cascade comprising at least two reactors,
b) precondensation of the esterification product obtained in stage a), and
c) polycondensation of the precondensate obtained in stage b),
wherein the reaction pressure decreases and the temperature does not increases along the reactor cascade in stage a).

2. A process as claimed in claim 1, wherein the esterification in stage a) is carried out at pressures of < 1 bar.

3. A process as claimed in claim 1 or 2, wherein, in a reactor cascade comprising three reactors, the pressure in the first reactor (p1) is < 1 bar, the pressure in the second reactor (p2) is < p1 - 100 mbar and the pressure in the third reactor (p3) is < p2.

4. A process as claimed in any of claims 1 to 3, wherein stage a) is carried out at from 170 to 250°C.

5. A process as claimed in any of claims 1 to 4, wherein the molar ratio of 1,4-butanediol to terephthalic acid at the beginning of stage a) is from 1.1:1 to 3.5:1.

6. A process as claimed in any of claims 1 to 5, wherein the conversion after the last reactor of stage a) is > 97%, based on terephthalic acid, before the precondensation in stage b) commences.

7. A process as claimed in any of claims 1 to 6, wherein stage a) is carried out in the presence of a catalyst, preferably tetrabutyl orthotitanate.

8. A process as claimed in any of claims 1 to 7, wherein stage b) is carried out at temperatures from 220 to 300°C and pressures in the range from 0.05 bar to the esterification pressure in the last reactor of the reactor cascade of stage a).

9. A process as claimed in any of claims 1 to 8, wherein the precondensate obtained in stage b) is polycondensed in stage c) at from 240 to 290°C and pressures of from 0.2 to 20 mbar.

10. A process as claimed in claim 9, wherein the polycondensation is continued until the polycondensate obtained has an acid number of < 50 meq/kg.

## Revendications

1. Procédé de production continue de polybutylène téréphtalate à partir d'acide téréphtalique et de 1,4-butanediol comprenant :
a) l'estérification directe de l'acide téréphtalique avec du 1,4-butanediol dans une cascade de réacteurs d'au moins deux réacteurs,
b) la précondensation du produit de l'estérification obtenu dans l'étape a),
c) la polycondensation du précondensat obtenu dans l'étape b),
**caractérisé en ce que** la cascade de réacteurs dans l'étape a) est opérée avec baisse de pression de réaction et non avec température croissante.

2. Procédé selon la revendication 1, **caractérisé en ce que** l'estérification dans l'étape a) est effectuée à des pressions de < 1 bar.

3. Procédé selon la revendication 1 ou 2, **caractérisé en ce que** dans une cascade de réacteurs de trois réacteurs, la pression dans le premier réacteur (p1) est < 1 bar, la pression dans le deuxième réacteur (p2) est < p1 - 100 mbar et la pression dans le troisième réacteur (p3) est < p2.

4. Procédé selon l'une des revendications 1 à 3, **caractérisé en ce que** l'étape a) est effectuée à une température de 170 à 250°C.

5. Procédé selon l'une des revendications 1 à 4, **caractérisé en ce que** le rapport molaire du 1,4-butanediol par rapport à l'acide téréphtalique au début de l'étape a) s'élève de 1,1:1 à 3,5:1.

6. Procédé selon l'une des revendications 1 à 5, **caractérisé en ce que** le degré de réaction après le dernier réacteur de l'étape a) s'élève à > 97 %, par rapport à l'acide téréphtalique, avant que la précondensation ne commence dans l'étape b).

7. Procédé selon l'une des revendications 1 à 6, **caractérisé en ce que** l'étape a) s'effectue en présence d'un catalyseur, de préférence l'ortho-titanate de tétrabutyle.

8. Procédé selon l'une des revendications 1 à 7, **caractérisé en ce que** l'étape b) s'accomplit à des températures entre 220 et 300°C et des pressions entre 0,05 bar et la pression d'estérification dans le dernier réacteur de la cascade de réacteurs de l'étape a).

9. Procédé selon l'une des revendications 1 à 8, **caractérisé en ce que** le précondensat obtenu dans l'étape b) est polycondensé dans l'étape c) à des températures de 240 à 290°C et à des pressions de 0,2 à 20 mbar.

10. Procédé selon la revendication 9, **caractérisé en ce que** l'on polycondense le temps qu'il faut pour que le polycondensat obtenu présente un indice d'acide de < 50 mval/kg.
